# EUROPÄISCHE PATENTANMELDUNG

(11) **EP 2 400 166 A2**
(43) Veröffentlichungstag der Anmeldung: **28.12.2011**
(21) Anmeldenummer: 11002566.5
(22) Anmeldetag: 29.03.2011
(51) Int. Cl.: F16B 5/02, F16B 41/00, F16B 43/00

(54) **Verliersicher gehaltene Schraube**

(30) Priorität: 24.06.2010 DE 102010025008; 24.06.2010 DE 202010009496 U
(71) Anmelder: KHS GmbH, 44143 Dortmund (DE)
(72) Erfinder: Koppers, Jörg, 47589 Uedem (DE)

(57) **Zusammenfassung**

Die Erfindung betrifft ein Montageteil (1), das eine, mittels eines Sicherungselements (2) unverlierbar daran lagerbare Schraube (3) aufweist, wobei das Sicherungselement (2) einen Quetschabschnitt (4) aufweist, und wobei das Montageteil (1) mittels der Schraube (3) mit einem Halteelement (5) verbindbar ist.

Um ein vereinfachtes Sicherungselement (2) zu erreichen, welches mit einer vorgegebenen Einbaulage ausgeführt ist, und auch bei herkömmlichen Sechskantschrauben (3) zum verliersicheren Halten der Schraube (3) an dem demontierten Montageteil geeignet ist, wird vorgeschlagen, dass das Sicherungselement (2) als Sicherungshülse mit einem im Querschnitt gesehen zylindrischen Grundkörper (6) ausgeführt ist, an dessen Kopfseite der Quetschabschnitt (4) angeordnet ist, und an dessen zur Kopfseite gegenüberliegenden Fußseite ein Halteabschnitt (7) angeordnet ist.

## Beschreibung

Die Erfindung betrifft ein Montageteil, das eine, mittels eines Sicherungselements unverlierbar daran lagerbare Schraube aufweist, wobei das Sicherungselement einen Quetschabschnitt aufweist, und wobei das Montageteil mittels der Schraube mit einem Halteelement verbindbar ist.

Zum Verbinden oder zur Montage von Bauteilen, Geräteteilen, Blechen, Gittern, Schutzvorrichtungen oder dergleichen an Halteelementen, wie zum Beispiel an Maschinen oder Aufnahmelaschen wird eine Schraube durch eine Bohrung des Montageteils geführt und mit ihrem Gewindeabschnitt mit dem Haltelement verschraubt. So ist beispielsweise ein Gehäuse oder auch beispielsweise eine durchsichtige Schutzwand der Maschine gebildet, so dass ein zuvor unzugänglicher Bereich der Maschine durch Aufheben der Schraubverbindung, also Demontage des Montageteils zugänglich gemacht werden kann.

Es ist bekannt, eine Verliersicherung für Schrauben mit Hilfe von Sprengringen oder Federringen zu erreichen. Diese Spreng- oder Federringe rasten im Bereich eines überstehenden Schraubenschaftes z.B. in eine umlaufende Nut ein und bewirken so die Unverlierbarkeit der Schrauben.

Unter den Begriff Montageteil fallen im Sinne der Erfindung auch Schutzeinrichtungen, also feststehende, trennende Schutzvorrichtungen an Maschinen, welche gemäß der EU-Maschinenrichtlinie 2006_42_EG mit daran unverlierbar gehaltenen Schrauben befestigt werden müssen. Selbstverständlich kann ein Montageteil auch ein Zaunelement sein, welches an einem Zaunpfahl angeschlossen werden kann. Insofern ist der Begriff Montageteil umfassend zu verstehen, wobei ein Montageteil mit einem Haltelement verbindbar ist, wobei in dem Haltelement selbst ein Aufnahmegewinde angeordnet sein kann. Natürlich kann das Haltelement auch eine gewindefreie Durchgangsbohrung aufweisen, durch welche die Schraube mit ihrem Gewindeende ragt, auf welches eine Mutter zur Verbindung aufschraubbar ist.

Die DE 20 2009 014 908 U1 befasst sich mit einem Montageteil mit einer unverlierbar daran angeschlossenen Schrauben. Die Schraube ist als spezielle Dünnschaftschraube ausgeführt, und weist ein Kopfende mit einem sich daran anschließenden Schraubenschaft auf. Der Schraubenschaft hat einen zum Kopfende gegenüberliegenden Gewindeabschnitt und einen dazwischen angeordneten gewindefreien Abschnitt. An dem gewindefreien Abschnitt ist ein Sicherungselement gehalten, mit welchem die Schraube unverlierbar an dem Montageteil gehalten ist. Das Sicherungselement ist als Sicherungsscheibe ausgeführt. Die Sicherungsscheibe weist einen aus der Scheibenebene ausgestellten, plastisch verformbaren Sicherungsabschnitt auf, welcher konisch ausgeführt ist, wobei die Sicherungsscheibe nach der plastischen Verformung an dem gewindefreien Abschnitt gefangen ist. In vormontierter Position, also wenn der plastisch verformbare Sicherungsabschnitt noch nicht verformt ist, ist die Sicherungsscheibe mit ihrem Sicherungsabschnitt von dem Montageteil wegorientiert auf der Schraube anzubringen. Aufgrund der Ausgestaltung als Sicherungsscheibe, kann es bei der Montage durchaus zu Vertauschungen der wohl notwendigen Einbaulage kommen, so dass die Sicherungsscheibe mit ihrem Sicherungsabschnitt inkorrekt zum Montageteil hin orientiert ist. Dies kann sich nachteilig auf eine (Vor)Montagezeit, welche wohl korrigiert werden sollte (Zeitaufwand), und die gewünschte Sicherungswirkung auswirken, so dass die Schraube nicht unbedingt verliersicher gehalten ist. Nachteilig ist weiter, dass die Sicherungsscheibe speziell an bestimmte Schrauben, nämlich Dünnschaftschrauben angepasst ausgeführt ist, bei welchen die Sicherungsscheibe in dem gewindefreien Abschnitt gefangen ist. Die verformbare Sicherungsscheibe ist so ausgeführt, dass diese in ihrem ursprünglichen Zustand über das Gewinde der Dünnschaftschraube steckbar ist, und nach einmaliger Verbindung so verformt wird, dass sich der Innendurchmesser verkleinert, so dass die Scheibe nicht mehr über das Gewinde der Dünnschaftschraube gezogen werden kann. Insofern sollte zur korrekten, wohl notwendigen Einbaulage der Sicherungsscheibe auch die speziell ausgeführte Schraube eingesetzt werden, um eine korrekte Funktion der verliersicheren Halterung der Schraube an dem Montageteil gewährleisten zu können. Spezielle Schrauben wie zum Beispiel Dünnschaftschrauben sind in ihrer Herstellung natürlich kostenintensiver als beispielsweise Sechskantschrauben mit an dem Schraubenschaft durchgehend angeordnetem Außengewinde.

Der Erfindung liegt daher die Aufgabe zugrunde, ein Montageteil, insbesondere dessen Sicherungselement zum verliersicheren Halten der Schraube an dem Montageteil mit einfachen Mittel so zu verbessern, dass dem Anwender eine vorgegebene, unverwechselbare Einbaulage an die Hand gegeben wird, wobei auch einfache Schrauben mit von der Kopfseite zur Fußseite durchgehendem Gewindeschaft eingesetzt werden können.

Erfindungsgemäß wird die Aufgabe durch ein Montageteil, bzw. durch ein Sicherungselement mit den Merkmalen des Anspruchs 1 bzw. 10 gelöst.

Zielführend ist, wenn das Sicherungselement als Sicherungshülse mit einem im Querschnitt gesehen zylindrischen Grundkörper ausgeführt ist, an dessen Kopfseite der Quetschabschnitt angeordnet ist, und an dessen zur Kopfseite gegenüberliegenden Fußseite ein Halteabschnitt angeordnet ist.

Das Montageteil weist eine äußere Oberfläche und eine dazu gegenüber liegend angeordnete innere Oberfläche auf. Die beiden Seitenbezeichnungen beziehen sich auf die Einbaulage des Montageteils, wobei die innere Oberfläche zu dem Haltelement orientiert ist. Das Sicherungselement bzw. die Sicherungshülse ist vorteilhaft mit einer festgelegten, vorgegebenen Einbaulage ausgeführt, wobei die Sicherungshülse vormontiert eine Durchgangsbohrung in dem Montageteil so durchgreift, dass eine Anlageseite des Quetschabschnitts oberhalb der äußeren Oberfläche des Montageteils angeordnet ist. Die Durchgangsbohrung des Montageteils ist insofern zweckmäßiger Weise an den Außenumfang der Sicherungshülse, bzw. an dem Außenumfang des zylindrischen Grundkörpers und den Außenumfang des Quetschabschnittes angepasst. Günstiger weise weist die Durchgangsbohrung einen bezogen auf den Außenumfang der Sicherungshülse größeren Innendurchmesser auf. Die Sicherungshülse wird in vorgegebener Einbaulage mit ihrem Quetschabschnitt von der inneren Oberfläche in Richtung zur äußeren Oberfläche in die Durchgangsbohrung eingeführt.

Zweckmäßig ist, wenn der Quetschabschnitt einen Innendurchmesser aufweist, welcher geringer ist als ein Innendurchmesser des zylindrischen Grundkörpers. So steht der Quetschabschnitt mit seiner inneren Stirnseite quasi stufenartig über der inneren Wand des zylindrischen Grundkörpers in Richtung zu einer Mittelachse über. In bevorzugter Ausgestaltung weist der Quetschabschnitt an seinem Innenumfang, also an seiner inneren Stirnseite eine bevorzugt umlaufende Verzahnung auf.

Der Quetschabschnitt ist mittels Krafteinwirkung, worauf weiter unten noch eingegangen wird, mit seiner inneren Stirnseite in Richtung zur Mittelachse verformbar. Insofern wird der innere Durchmesser des Quetschabschnitts durch Krafteinwirkung weiter verkleinert, bzw. plastisch deformiert. Vorteilhaft ist vorgesehen, in einem Übergang der Innenwand des zylindrischen Grundkörpers zum Quetschabschnitt eine in Umfangsrichtung gesehen bevorzugt umlaufende Ausnehmung vorzusehen, so dass quasi ein Sollknickstelle gebildet ist, um welche der Quetschabschnitt bzw. dessen innere Stirnseite zusätzlich zur Verformung noch um die Sollknickstelle schwenken kann.

Der Quetschabschnitt weist die oben genannte Anlageseite auf, welche bevorzugt eben ausgeführt ist. Die Anlageseite erstreckt sich von der inneren Stirnseite in Richtung zum Außenumfang des Quetschabschnittes, und geht in bevorzugter Ausgestaltung in einen abgeschrägten Übergang über, welcher in Richtung zum Außenumfang des zylindrischen Grundkörpers geneigt ist, und an diesem endet.

Im Gegensatz zum Quetschabschnitt ist der Halteabschnitt günstiger Weise mit einem zum Innendurchmesser des zylindrischen Grundkörpers bevorzugt gleichen Innendurchmesser ausgeführt. An seinem Außenumfang erweitert sich der Halteabschnitt mit seinem Außendurchmesser bezogen auf den Außendurchmesser des zylindrischen Grundkörpers. In bevorzugter Ausgestaltung ist der Halteabschnitt mit einer sich von dem zylindrischen Grundkörper wegorientierten Haltefläche versehen. Weiter bevorzugt ist die Haltefläche im Querschnitt gesehen konisch ausgeführt.

Zweckmäßig ist, wenn der Quetschabschnitt gegenläufig zum Halteabschnitt ausgeführt ist, so dass quasi ein im Querschnitt gesehen z-förmig ausgeführtes Sicherungselement gebildet ist, dessen Basissteg im Querschnitt gesehen senkrecht verlaufend ausgeführt ist. Der Quetschabschnitt ist in Richtung zu einer Mittelachse orientiert, wobei der Halteabschnitt von dieser wegorientiert verläuft.

Die Durchgangsbohrung des Montageteils weist einen ersten Abschnitt auf, welcher sich von der äußeren Oberfläche in Richtung zur inneren Oberfläche erstreckt und in einen zweiten Abschnitt übergeht, welcher sich von einem Übergang des ersten Abschnitts zum zweiten Abschnitt in Richtung zur inneren Oberfläche erstreckend an dieser endet. Der erste Abschnitt ist bevorzugt im Querschnitt gesehen mit einer zylindrisch verlaufenden Innenwand angepasst an den Quetschabschnitt und den zylindrischen Grundkörper ausgeführt, was oben bereits beschrieben wurde. Der zweite Abschnitt ist korrespondierend zur Ausgestaltung des Halteabschnitts des Sicherungselementes, bzw. dessen Haltefläche ausgeführt, und kann entsprechend als Gegenhaltefläche bezeichnet werden. In zweckmäßiger Ausgestaltung ist vorgesehen, dass der zweite Abschnitt konusförmig ausgeführt ist, so dass sich die Durchgangsbohrung von der inneren Oberfläche in Richtung zum Übergang des ersten Abschnitts zum zweiten Abschnitt verjüngt. Insofern kann der zweite Abschnitt der Durchgangsbohrung auch als Kegelsenkung bezeichnet werden.

Vorteilhaft ist, dass die Schraube als Sechskantschraube mit einem an dem Schraubenschaft angeordneten Außengewinde ausführbar ist, wobei sich das Au-βengewinde durchgehend von dem Schraubenkopf zum gegenüberliegenden Fußseite erstreckt. Im vormontierten Zustand ist zwischen dem Schraubenkopf und der Anlageseite des Quetschabschnittes eine Unterlegscheibe angeordnet, welche mit ihrer oberen Oberfläche an dem Schraubenkopf und mit ihrer unteren Oberfläche an der Anlageseite des Quetschabschnittes anliegt. In der Vormontageposition ist die untere Oberfläche der Unterlegscheibe zur äußeren Oberfläche des Montageteils beabstandet, so dass ein Spalt gebildet ist, da der Quetschabschnitt mit seiner Anlageseite die äußere Oberfläche überragt. Die Schraube durchgreift die Durchgangsbohrung und die darin angeordnete Sicherungshülse und wird mit dem Haltelement, in welchem ein zum Außengewinde korrespondierende Innengewinde angeordnet ist, zunächst locker verschraubt. Möglich ist, dass mehrere Schraubverbindungen zur Montage des Montageteils an Haltelementen hergestellt werden müssen. Sind alle Schraubverbindungen vormontiert, kann jeweils die finale Verbindung hergestellt werden, indem die Schraube fest in das Haltelement eingeschraubt wird. Natürlich können auch einzelne Schraubverbindungen final hergestellt werden, ohne dass es einer Vormontage bedarf. Zur Vermeidung von Spannungen ist bevorzugt die beschriebene Vormontage aller Verbindungspunkte vorgesehen.

Bei dem Anziehen der Schraube wird der Quetschabschnitt mit seiner inneren Stirnseite auf das Außengewinde der Schraube gequetscht, und geht so eine Verbindung, bevorzugt eine unlösbare Verbindung mit der Schraube ein. Das Sicherungselement bzw. dessen Quetschabschnitt ist mit seiner Anlageseite nach dem hinreichenden Anziehen der Schraube bündig zur äußeren Oberfläche des Montageteils angeordnet, so dass die Unterlegscheibe mit ihrer korrespondierenden unteren Oberfläche spaltfrei sowohl an der Anlageseite des Quetschabschnittes als auch an der äußeren Oberfläche des Montageteils anliegt. Durch die Ausgestaltung des Sicherungselementes als Sicherungshülse ist der Halteabschnitt derselben auch im angezogenen Zustand der Schraube zur korrespondierenden Gegenhaltefläche aber auch der Außenumfang der Sicherungshülse zum Innenumfang der Durchgangsbohrung des Montageteils beabstandet, so dass ein Spalt gebildet ist. Soll die Schraubverbindung gelöst werden, kann die Schraube so mitsamt der Sicherungshülse innerhalb der Durchgangsbohrung entsprechend gedreht werden, ohne dass sich die Schraube von dem Montageteil entfernt, da die Quetschverbindung zwischen dem Quetschabschnitt und dem Außengewinde quasi unlösbar ist, kann jedoch nicht mehr aus dem Montageteil entfernt werden, da der Halteabschnitt eine entsprechend schräg ausgeführte Haltefläche hat, welche einen größeren Au-βendurchmesser hat als der zylindrisch ausgeführte Abschnitt der Durchgangsbohrung. Selbstverständlich ist die Schraubverbindung erneut herstellbar, wobei ein erneutes Herstellen der Quetschverbindung zwischen Sicherungselement und Au-βengewinde entfällt. Gleichwohl ist die Schraube mitsamt dem Sicherungselement innerhalb der Durchgangsbohrung relativ zu dieser drehbar.

Zielführend bei der Erfindung ist, dass "normale" Schrauben mit durchgehendem Außengewinde eingesetzt werden können, wobei durch die Ausgestaltung der Sicherungshülse mit ihrem Quetschabschnitt und mit ihrem Halteabschnitt eine vorgegebene, unverwechselbare Einbaulage geschaffen ist. Denn es ist nicht möglich, den Halteabschnitt von der inneren Oberfläche des Montageteils durch dessen Durchgangsbohrung in Richtung zur äußeren Oberfläche zu stecken.

Das Sicherungselement bzw. die Sicherungshülse kann aus einem Eisenmetall, einem Nichteisenmetall oder aus einem Kunststoff gefertigt sein, wobei das bevorzugte Material zumindest an dem Quetschabschnitt plastische, also irreversible Verformungseigenschaften aufweisen sollte.

Vorteilhaft ist, dass das Sicherungselement, bzw. die Sicherungshülse mit ihrem Halteabschnitt vollständig in der Durchgangsbohrung des Montageteils zumindest nach der finalen Verbindung aufgenommen ist, so dass die zur Anlageseite des Quetschabschnittes gegenüberliegende Unterseite bündig mit der inneren Oberfläche des Montageteils abschließt. So liegt die innere Unterseite des Montageteils, aber auch der Halteabschnitt selbst ohne Höhenversatz an dem Halteelement an, wodurch vorteilhaft schädliche Schwingungen in dem Montageteil vermieden werden können, welche sich zu störenden Geräuschen entwickeln könnten.

Weitere vorteilhafte Ausgestaltungen der Erfindung sind in den Unteransprüchen und der folgenden Figurenbeschreibung offenbart. Es zeigen
- Fig. 1: ein Montagteil in vormontiertem Zustand im Querschnitt gesehen,
- Fig. 2: ein Sicherungselement als Einzelheit im Querschnitt,
- Fig.3: das Sicherungselement aus Figur 2 in perspektivischer Ansicht.
- Fig. 4: ein Sicherungselement in weiterer Ausgestaltung im Querschnitt,
- Fig. 5: das Sicherungselement aus Figur 4 in perspektivischer Ansicht, und
- Fig. 6: das Montageteil aus Figur 1 im final montierten Zustand.

In den unterschiedlichen Figuren sind gleiche Teile stets mit denselben Bezugszeichen versehen, weswegen diese in der Regel auch nur einmal beschrieben werden.

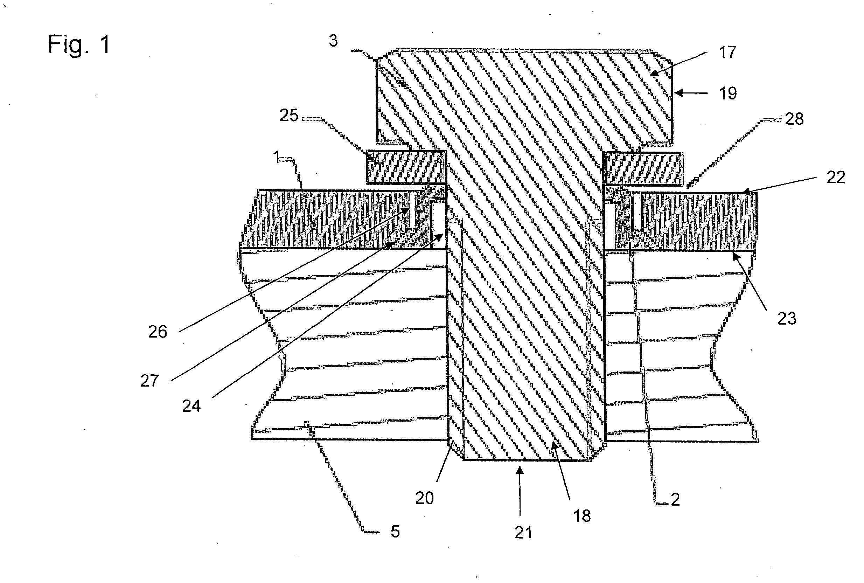

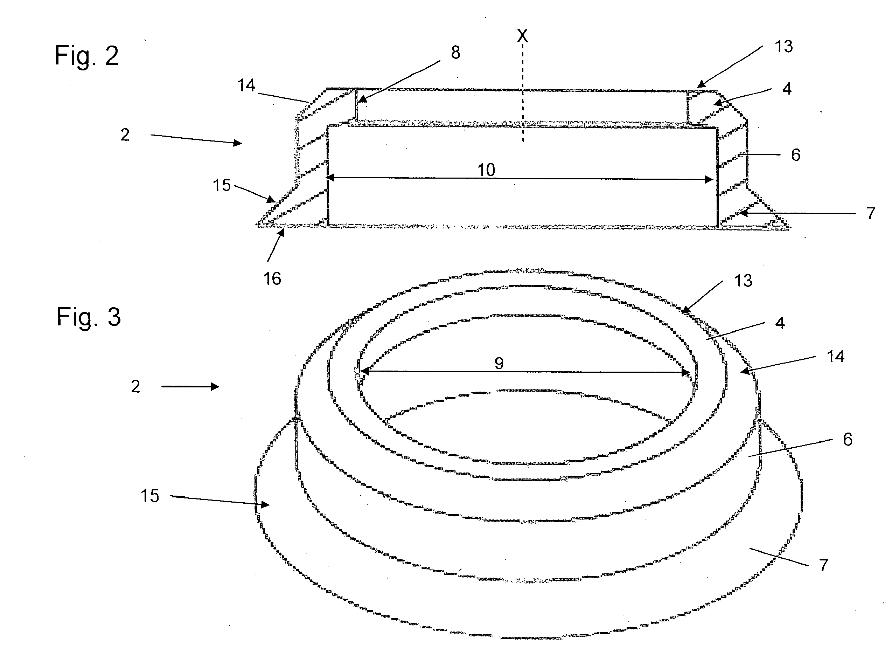

Figur 1 zeigt ein Montageteil 1, das eine, mittels eines Sicherungselementes 2 unverlierbar daran lagerbare Schraube 3 aufweist. Das Sicherungselement 2 weist einen Quetschabschnitt 4 auf, wobei das Montageteil 1 mittels der Schraube 3 mit einem Halteelement 5 verbindbar ist. In Figur 1 ist das Montageteil 1 in einer Vormontageposition dargestellt. In Figur 2 ist das Sicherungselement 2 als Einzelheit im Querschnitt dargestellt. Das Sicherungselement 2 ist als Sicherungshülse mit einem im Querschnitt gesehen zylindrischen Grundkörper 6 ausgeführt. An dem zylindrischen Grundkörper 6 ist kopfseitig der Quetschabschnitt 4 angeordnet. Gegenüberliegend zum Quetschabschnitt 4, also fußseitig ist ein Halteabschnitt 7 angeordnet. Der Übersicht wegen sind die das Sicherungselement betreffenden Bezugszeichen nur in den Figuren 2 bis 5 eingezeichnet.

Der Quetschabschnitt 4 weist an seiner inneren Stirnseite 8 einen Innendurchmesser 9 auf, welcher geringer ist als ein Innendurchmesser 10 des zylindrischen Grundkörpers 6. Insofern steht der Quetschabschnitt 4 quasi stufenartig von dem zylindrischen Grundkörper 6 ab, wobei die innere Stirnseite 8 in Richtung zu einer Mittelachse X orientiert ist.

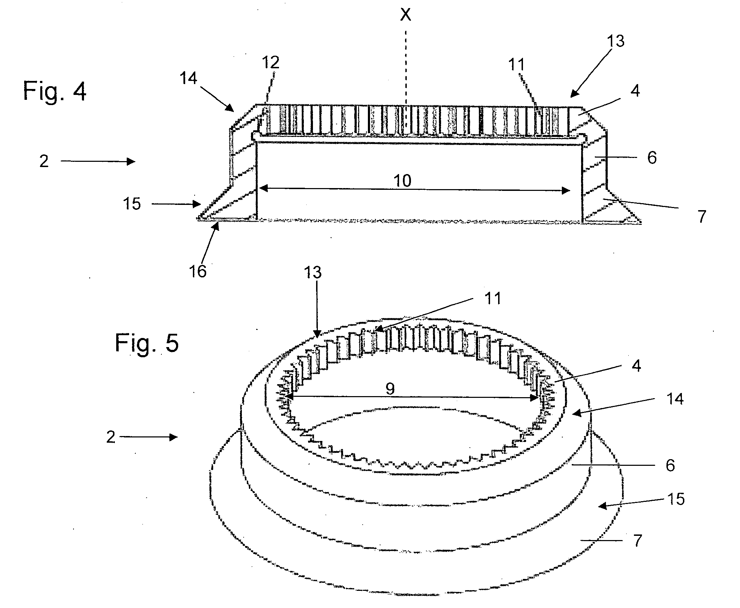

Bei dem in Figur 4 dargestellten Ausführungsbeispiel weist der Quetschabschnitt 4 an seiner inneren Stirnseite 8 eine in Umfangsrichtung umlaufende Verzahnung 11 auf. Optional ist noch eine Ausnehmung 12 vorgesehen, welche in einem Übergang des zylindrischen Grundkörpers 6 und dem Quetschabschnitt 4 angeordnet. Die Ausnehmung 12 kann auch als Kerbe oder Hinterschnitt bezeichnet werden, und bildet eine Sollknickstelle.

Der Quetschabschnitt 4 weist eine eben ausgeführte Anlageseite 13 auf, welche sich von der inneren Stirnseite 8 wegorientiert in Richtung zum Außenumfang erstreckt, wobei die Anlageseite 13 in einen schräg verlaufenden Übergangsabschnitt 14 übergeht. Der Übergangsabschnitt 14 ist in der Zeichnungsebene von oben nach unten geneigt, und endet an dem Außenumfang des zylindrischen Grundkörpers 6.

Der Innendurchmesser 10 des zylindrischen Grundkörpers 6 ist in den Halteabschnitt 7 weitergeführt, so dass beide Bereiche 6 und 7 einen vom Betrag gesehen gleichen Innendurchmesser aufweisen.

Der Halteabschnitt 7 weist an seinem Außenumfang eine Haltefläche 15 auf, welche sich von dem zylindrischen Grundkörper 6 konisch verlaufend wegerstreckt, so dass sich die Haltefläche 15 in der Zeichnungsebene gesehen von oben, also von dem Außenumfang des zylindrischen Grundkörpers 6 nach unten in Richtung zu einer Unterseite 16 von der Mittelachse X des Sicherungselementes 2 wegorientiert erweitert. Bei dem in den Figuren 1 bis 6 dargestellten Ausführungsbeispiel ist die Haltefläche 15 eben verlaufend ausgeführt. Denkbar ist natürlich eine gewölbte, z.B. konkave oder konvexe Ausgestaltung. Möglich ist auch, den Halteabschnitt 7 konusfrei auszuführen, wobei der Halteabschnitt 7 dann quasi als Flanschfortsatz ausgeführt sein könnte.

Das Sicherungselement 2 bzw. die Sicherungshülse ist im Querschnitt gesehen vereinfacht gesagt quasi z-förmig mit einem Basissteg, einem Kopfsteg und einem gegenläufig zu diesem verlaufenden Fußsteg ausgeführt. Der Basissteg entspricht dabei vereinfacht dem zylindrischen Grundkörper 6, wobei der Quetschabschnitt 4 dem Kopfsteg entspricht, welcher zur Mittelachse X orientiert ist. der Fußsteg entspricht dem Halteabschnitt 7, welcher quasi von der Mittelachse X wegorientiert ist. Der Basissteg bzw. der zylindrische Grundkörper 6 ist parallel zur Mittelachse X verlaufend ausgeführt.

Die Schraube 3 weist einen Kopf 17 und einen Schraubenschaft 18 auf. Der Kopf 17 weist eine Schlüsselfläche 19 auf, wobei die Schraube 3 beispielhaft als Sechskantschraube ausgeführt ist. An dem Schraubenschaft 18 ist ein Außengewinde 20 angeordnet. Das Außengewinde 20 ist von dem Kopf 17 bis zur gegenüber liegenden Fußseite 21 bevorzugt durchgehend an dem Schraubenschaft 18 angeordnet.

Das Montageteil 1 ist in dem dargestellten Ausführungsbeispiel eine Schutzvorrichtung zum Beispiel in der Ausgestaltung als Schutzscheibe. Das Montageteil 1 weist eine äußere Oberfläche 22 und eine innere Oberfläche 23 auf. Die innere Oberfläche 23 ist zum Halteelement 5 orientiert.

In dem Montageteil 1 ist zumindest eine Durchgangsbohrung 24 angeordnet, in welcher das Sicherungselement 2 aufgenommen ist. Die Schraube 3 ist mit ihrem Schaft 18 durch das Sicherungselement 2 geführt. Zwischen dem Schraubenkopf und der Anlageseite 13 des Quetschabschnittes 4 ist eine Unterlegscheibe 25 angeordnet.

Die Durchgangsbohrung 24 weist zwei Abschnitte 26 und 27 auf. Ein erster Abschnitt 26 erstreckt sich von der äußeren Oberfläche 22 in Richtung zur inneren Oberfläche 23 und geht in einen zweiten Abschnitt 27 über, welcher an der inneren Oberfläche 23 endet. Der erste Abschnitt 26 ist im Querschnitt gesehen durchgehend zylindrisch ausgeführt, wobei sich der zweite Abschnitt 27 angepasst zum Verlauf der Haltefläche 15 des Halteabschnitts 7 des Sicherungselementes 2 konisch erweitert. Der zweite Abschnitt 27 kann auch als Kegelsenkung bezeichnet werden, welcher natürlich auch gewölbte Flanken haben kann, um an den Halteabschnitt 15 angepasst zu sein. Ist der Halteabschnitt 15, wie oben beschrieben, als Flanschfortsatz ausgeführt, würde der zweite Abschnitt 27 entsprechend angepasst als im Querschnitt gesehen zylindrische Vertiefung mit einem bezogen auf den ersten Abschnitt 26 größeren Innendurchmesser ausgeführt sein.

Im vormontierten Zustand (Figur 1) ist das Sicherungselement 2 mit seinem Quetschabschnitt 4 von der inneren Oberfläche 23 aus in die Durchgangsbohrung 24 eingesetzt, so dass die Anlageseite 13 des Quetschabschnitts die äußere Oberfläche 22 des Montageteils 1 etwas überragt. Die Schraube 3 ist mit ihrem Schaft 18 von der äußeren Oberfläche 22 des Montageteils 1 durch das in der Durchgangsbohrung aufgenommene Sicherungselement 2 gesteckt. Zwischen der Unterseite der Unterlegscheibe 25 und der äußeren Oberfläche 22 des Montageteils 1 ist ein Spalt 28 gebildet, da die Unterlegscheibe 25 auf der Anlageseite 13 des Quetschabschnitts 4 anliegt.

Die Schraube 3 kann mit ihrem Außengewinde etwas zur inneren Stirnseite 8 des Quetschabschnittes 4 beabstandet sein. Wie in Figur 1 dargestellt, kann die innere Stirnseite 8 aber auch mit einem solchen Innendurchmesser ausgeführt sein, dass die innere Stirnseite 8 an dem Außengewinde des Schraubenschaftes 18 anliegt, wobei der Schraubenschaft 18 zur Innenwand sowohl des zylindrischen Grundkörpers 6 als auch zu der Innenwand des Halteabschnittes gleich beabstandet ist. So kann die Schraube 3 auch schon im vormontierten Zustand mittels des Sicherungselementes 2, zwar gemäß der Maschinenrichtlinie 2006 42_EG nicht hinreichend, aber doch die Montage erleichternd gehalten sein.

In dem vormontierten Zustand ist die Schraube 3 locker mit dem Haltelement 5 verbunden. Das Sicherungselement 2 bzw. die Sicherungshülse 2 hat, insbesondere am Quetschabschnitt 4 noch seine bzw. ihre ursprüngliche Form. So können zunächst alle vorhandenen Verbindungspunkte vormontiert werden.

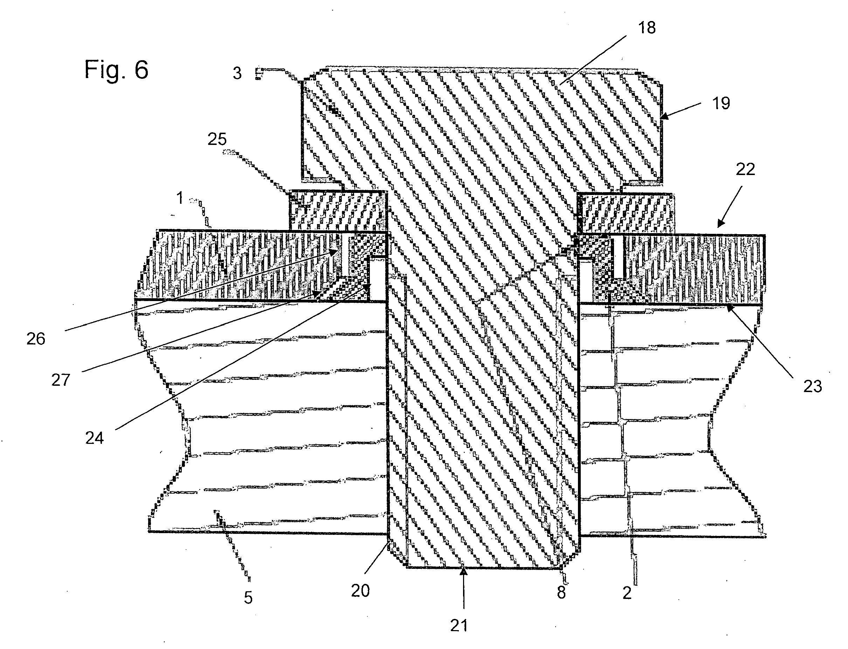

Zur finalen Verbindung wird die Schraube 3 in das Innengewinde des Haltelementes 5 gedreht, so dass die Unterlegscheibe 25 in Richtung zum Montageteil 1 bewegt wird, wodurch eine Kraft auf den Quetschabschnitt 4 ausgeübt wird. Dabei wird der Quetschabschnitt 4 so verformt, dass seine innere Stirnseite 8 eine unlösbare Verbindung mit dem Außengewinde 20 des Schraubenschaftes 18 eingeht, was durch die optionale Verzahnung 11 noch verstärkt wird. Der montierte Zustand ist in Figur 6 dargestellt.

Im montierten Zustand liegt die Unterlegscheibe 25 auf der Anlageseite 13 aber auch auf der äußeren Oberfläche 22 des Montageteils 1 an. Der ursprüngliche Spalt 28 (Figur 1) ist geschlossen. Die Unterseite 16 des Sicherungselementes 2 bzw. des Halteabschnitts 7 liegt an dem Haltelement 5 ebenso wie die innere Oberfläche 23 des Montageteils 1 spaltfrei an. Insofern ist das Sicherungselement 2 sowohl mit seiner Anlageseite 13 des Quetschabschnittes 4, als auch mit seiner Unterseite 16 jeweils bündig zur äußeren Oberfläche 22 bzw. zur inneren Oberfläche 23 angeordnet.

Diese so hergestellte Verbindung des Quetschabschnittes 4 zum Schraubenschaft 18 ist unlösbar, es sei denn das Sicherungselement 2 würde zerstört. Gleichwohl ist die Schraube 3 mitsamt dem Sicherungselement 2 relativ zum Montageteil 1 innerhalb der Durchgangsbohrung 24 drehbar, so dass das Montageteil gegebenenfalls von dem Haltelement 5 entfernt werden kann. Durch die unlösbare Verbindung des Quetschabschnittes 4 zum Außengewinde 20 der Schraube 3 ist die Schraube im demontierten Zustand unverlierbar an dem Montageteil 1 gehalten. Zielführend ist dabei, dass der Halteabschnitt 7 zumindest bereichsweise einen grö-βeren Durchmesser aufweist als der erste Abschnitt 26 der Durchgangsbohrung 24, wobei die Schraube 3 durch Zusammenwirken der Haltefläche 15 mit der Gegenhaltefläche (zweiter Abschnitt 26 bzw. Kegelsenkung) gehalten ist, wenn das Montageteil 1 demontiert ist.

Zur erneuten Montage des Montageteils 1 an dem Haltelement 5, ist die Schraube 3 relativ zum Montageteil 1 verdrehbar und in das entsprechende Innengewinde einschraubbar, wobei die einmal hergestellte Quetschverbindung des Quetschabschnittes 4 zum Außengewinde 20 des Schraubenschaftes 18 bestehen bleibt.

Das Montageteil 1 kann zum Beispiel eine Schutzscheibe einer getränketechnologischen Maschine oder dergleichen sein, ohne das Ausführungsbeispiel darauf zu beschränken. Denkbar ist eine Ausgestaltung des Montageteils 1 z.B. als Schutzgitter oder Zaunelement. Das Haltelement 5 kann ein Konstruktionsteil einer Maschine, eine Haltelasche oder dergleichen sein, was natürlich auch nicht beschränkend sein soll. Natürlich ist auch möglich auf ein Innengewinde in dem Haltelement zu verzichten, so dass stattdessen eine Mutter einsetzbar wäre. Allerdings wäre dies eine Anwendung außerhalb der Forderung der Maschinenrichtlinie 2006 42_EG, da die Mutter als verlierbare Komponente angesehen würde. Allerdings soll die Erfindung nicht auf das Erfüllen der Maschinenrichtlinie 2006 42_EG beschränkt sein, obwohl das Sicherungselement 2 für diese Anwendung besonders geeignet ist.

Bei der in den Figuren 1 und 6 dargestellten Schraube 3 ist das Außengewinde 20 von der Fußseite 21 bis kurz vor dem Kopf 17 endend angedeutet. Natürlich kann das Außengewinde 20 auch bis zum Kopf 17 geführt sein, was bevorzugt ist, und in der Zeichnung so nicht erkennbar ist. Selbstverständlich ist es auch möglich einen gewindefreien Abschnitt des Schraubenschaftes 18 vorzusehen, wobei die Schraube 3 vorteilhaft nicht als spezielle Dünnschaftschraube ausgeführt ist, sondern an seinem gewindefreien Abschnitt einen zum Außendurchmesser des dann vorhandenen Gewindeschaftes gleichen Außendurchmesser aufweist.

### Bezugszeichenliste

- 1: Montageteil
- 2: Sicherungselement
- 3: Schraube
- 4: Quetschabschnitt
- 5: Halteelement
- 6: Zylindrischer Grundkörper
- 7: Halteabschnitt
- 8: Innere Stirnseite von 4
- 9: Innerer Durchmesser von 4
- 10: Innendurchmesser von 6
- 11: Verzahnung an 8
- 12: Ausnehmung
- 13: Anlageseite von 4
- 14: Übergangsabschnitt
- 15: Haltefläche von 7
- 16: Unterseite von 2 bzw. 7
- 17: Kopf von 3
- 18: Schraubenschaft
- 19: Schlüsselfläche
- 20: Außengewinde
- 21: Fußseite von 3
- 22: Äußere Oberfläche von 1
- 23: Innere Oberfläche von 1
- 24: Durchgangsbohrung in 1
- 25: Unterlegscheibe
- 26: Erster Abschnitt von 24
- 27: Zweiter Abschnitt von 24 (Kegelsenkung)
- 28: Spalt

## Patentansprüche

1. Montageteil, das eine, mittels eines Sicherungselements (2) unverlierbar daran lagerbare Schraube (3) aufweist, wobei das Sicherungselement (2) einen Quetschabschnitt (4) aufweist, und wobei das Montageteil (1) mittels der Schraube (3) mit einem Halteelement (5) verbindbar ist, **dadurch gekennzeichnet, dass**
das Sicherungselement (2) als Sicherungshülse mit einem im Querschnitt gesehen zylindrischen Grundkörper (6) ausgeführt ist, an dessen Kopfseite der Quetschabschnitt (4) angeordnet ist, und an dessen zur Kopfseite gegenüberliegenden Fußseite ein Halteabschnitt (7) angeordnet ist.

2. Montageteil nach Anspruch 1, **dadurch gekennzeichnet, dass** der Quetschabschnitt (4) im Querschnitt gesehen einen Innendurchmesser (9) aufweist, welcher geringer ist als ein Innendurchmesser (10) des zylindrischen Grundkörpers (6).

3. Montageteil nach Anspruch 1 oder 2, **dadurch gekennzeichnet, dass** der Quetschabschnitt (4) mit seiner inneren Stirnseite (8) in Richtung zu einer Mittelachse (X) orientiert, über eine Innenwand des zylindrischen Grundkörpers (6) übersteht.

4. Montageteil nach einem der vorhergehenden Ansprüche, **dadurch gekennzeichnet, dass** der Quetschabschnitt (4) an seiner inneren Stirnseite (8) eine Verzahnung (11) aufweist.

5. Montageteil nach einem der vorhergehenden Ansprüche, **dadurch gekennzeichnet, dass** das Sicherungselement (2) in einem Übergang von einer Innenwand des zylindrischen Grundkörpers (6) zum Quetschabschnitt (4) eine Ausnehmung (12) aufweist, so dass eine Sollknickstelle gebildet ist.

6. Montageteil nach einem der vorhergehenden Ansprüche, **dadurch gekennzeichnet, dass** der Halteabschnitt (7) mit einem zum Innendurchmesser (10) des zylindrischen Grundkörpers (6) gleichen Innendurchmesser ausgeführt ist.

7. Montageteil nach einem der vorhergehenden Ansprüche, **dadurch gekennzeichnet, dass** der Halteabschnitt (7) eine Haltefläche (15) aufweist, welche von dem zylindrischen Grundkörper (6) wegorientiert konisch ausgeführt ist.

8. Montageteil nach einem der vorhergehenden Ansprüche, **gekennzeichnet durch** eine Durchgangsbohrung (24) welche zwei ineinander übergehende Abschnitte (26,27) aufweist, von denen ein erster Abschnitt (26) im Querschnitt gesehen zylindrisch ausgeführt ist, wobei ein zweiter Abschnitt (27) konisch ausgeführt ist, wobei erste Abschnitt von einer äußeren Oberfläche (22) des Montageteils (1) in Richtung zur gegenüberliegenden inneren Oberfläche (23) orientiert ist, und in den zweiten Abschnitt (27) übergeht, welcher an der inneren Oberfläche (23) endet.

9. Montageteil nach einem der vorhergehenden Ansprüche, **dadurch gekennzeichnet, dass** das Sicherungselement (2) zumindest an seinem Quetschabschnitt (4) aus einem Material mit plastisch deformierbaren Eigenschaften gebildet ist.

10. Sicherungselement mit einem Quetschabschnitt (4) zum verliersicheren Halten einer Schraube (3) an einem Montageteil (1), insbesondere nach einem der vorhergehenden Ansprüche, **gekennzeichnet durch** einen im Querschnitt gesehen zylindrischen Grundkörper (6), an dessen Kopfseite der Quetschabschnitt (4) angeordnet ist, und an dessen zur Kopfseite gegenüberliegenden Fußseite ein Halteabschnitt (7) angeordnet ist, so dass eine Sicherungshülse (2) gebildet ist, welche mit ihrem Quetschabschnitt (4) nach einer Erstmontage unlösbar mit einem Außengewinde (20) der Schraube (3) verbunden ist, wobei die Schraube (3) mitsamt der damit verbundenen Sicherungshülse (2) relativ zum Montageteil (1) drehbar ist.
